# EUROPEAN PATENT SPECIFICATION

(11) **EP 4 182 185 B1**
(45) Date of publication and mention of the grant of the patent: **21.01.2026**
(21) Application number: 21748818.8
(22) Date of filing: 19.07.2021
(51) Int. Cl.: B60Q 1/00, B60Q 1/08, G06V 10/141, G06V 10/70, G06V 10/774

(54) **METHOD FOR OPERATING AN AUTOMOTIVE LIGHTING DEVICE AND AUTOMOTIVE LIGHTING DEVICE**
VERFAHREN ZUM BETREIBEN EINER KRAFTFAHRZEUGBELEUCHTUNGSEINRICHTUNG UND KRAFTFAHRZEUGBELEUCHTUNGSEINRICHTUNG
PROCÉDÉ DE FONCTIONNEMENT D'UN DISPOSITIF D'ÉCLAIRAGE AUTOMOBILE ET DISPOSITIF D'ÉCLAIRAGE AUTOMOBILE

(30) Priority: 20.07.2020 FR 2007596
(43) Date of publication of application: 24.05.2023
(73) Proprietor: VALEO VISION, 93012 Bobigny Cedex (FR)
(72) Inventor: KANJ, Ali, 93012 Bobigny - Cedex (FR)
(74) Representative: Valeo Visibility
(86) International application number: PCT/EP2021/070174
(87) International publication number: WO 2022/018039

(56) References cited:
- EP-A1- 3 647 115
- US-A1- 2015 286 340
- US-A1- 2018 334 086
- KÖNNING THOMAS ET AL: "P1.4 Light has to go where it is needed: Future Light Based Driver Assistance Systems", 31 December 2007 (2007-12-31), XP055802412, Retrieved from the Internet <URL:http://media1.mypage.cz/files/media1:4aae40a7dffe1.pdf.upl/P1.4_079_Koenning_Thomas_Hella.pdf> [retrieved on 20210507]
- YING LI ET AL: "Intelligent headlight control using camera sensors", USE OF CONTEXT IN VISION PROCESSING, ACM, 2 PENN PLAZA, SUITE 701 NEW YORK NY 10121-0701 USA, 5 November 2009 (2009-11-05), pages 1 - 6, XP058313336, ISBN: 978-1-60558-691-5, DOI: 10.1145/1722156.1722159

## Description

This invention is related to the field of automotive lighting devices, and more particularly, to the management of the light patterns provided by these devices.

Digital lighting devices such as those disclosed in EP3647115A1 are being increasingly adopted by car makers for middle and high market products.

These digital lighting devices usually comprise solid-state light sources, the operation of which may be customized.

However, sometimes it is not easy to show which parameters are involved in the customization of the light pattern. Sometimes it is difficult to consider all the circumstances involved in lighting the road ahead the vehicle.

The invention provides an alternative solution for providing an optimal light pattern of an automotive lighting device by a method for operating an automotive lighting device according to the invention. Preferred embodiments of the invention are defined in dependent claims.

Unless otherwise defined, all terms (including technical and scientific terms) used herein are to be interpreted as is customary in the art. It will be further understood that terms in common usage should also be interpreted as is customary in the relevant art and not in an idealised or overly formal sense unless expressly so defined herein.

In this text, the term "comprises" and its derivations (such as "comprising", etc.) should not be understood in an excluding sense, that is, these terms should not be interpreted as excluding the possibility that what is described and defined may include further elements, steps, etc.

In a first inventive aspect, the invention provides a method for operating an automotive lighting device comprising a matrix arrangement of light pixels, the method comprising the steps of:
acquiring image data of a working zone in front of the automotive lighting device;
transforming the image data into a luminance map;
providing a desired light pattern;
calculating an adapted light pattern which provides the desired light pattern when projected over the luminance map; and
projecting the adapted light pattern.

The term "solid state" refers to light emitted by solid-state electroluminescence, which uses semiconductors to convert electricity into light. Compared to incandescent lighting, solid state lighting creates visible light with reduced heat generation and less energy dissipation. The typically small mass of a solid-state electronic lighting device provides for greater resistance to shock and vibration compared to brittle glass tubes/bulbs and long, thin filament wires. They also eliminate filament evaporation, potentially increasing the lifespan of the illumination device. Some examples of these types of lighting comprise semiconductor light-emitting diodes (LEDs), organic light-emitting diodes (OLED), or polymer light-emitting diodes (PLED) as sources of illumination rather than electrical filaments, plasma or gas.

This method is aimed to find the optimal light pattern to be projected by a lighting device taking into account all the circumstances which may be acquired by an image. Information is therefore acquired directly, without any estimation of the surrounding circumstances. With this method, not only the light projected by other vehicles or objects is considered, but also the particular effects of different climate issues, which may cause light to reflect or refract, thus providing a completely unique luminance map.

In some particular embodiments, the steps of the method are performed periodically with a period lower than 2 seconds, and particularly lower than 0.5 seconds.

This feature involves a quick adaptation to changes in the environmental conditions of the vehicle.

In some particular embodiments, wherein the step of transforming the image data into a luminance map is carried out by a control unit which is previously configured to transform the image data into a luminance map by means of:
training the control unit to provide a luminance map with a training dataset of image data; and
testing the control unit comparing the luminance map provided by the control unit with measured luminance map.

This way of training the control unit is useful since provides the control unit with the ability to provide a luminance map in an improved way.

In some particular embodiments, the step of calculating the adapted light pattern is carried out by a control unit which is previously configured to calculate the adapted light pattern by means of:
training the control unit to calculate an adapted light pattern in response to a training dataset of luminance map and desired light pattern; and
testing the control unit comparing the calculated adapted light pattern with measured light pattern.

This way of training the control unit is useful since provides the control unit with the ability to calculate the adapted light pattern in an improved way.

In some particular embodiments, the step of training the control unit comprises the use of a machine learning algorithm.

This machine learning algorithm may be used both in the transformation of the image data into a luminance map and/or in the calculation of the adapted light pattern. Each one of the two options follows its own machine learning algorithm. Once the corresponding results are validated, the values of the control unit are used to the corresponding steps of the method of the invention.

In some particular embodiments, the luminance map isolates the position of the road from the position of other objects in the working zone.

This is very important to define the desired light pattern, since the desired light pattern depends on the size and position of the road.

In some particular embodiments, the image data comprises RGB pixels.

This is a common and simple way to acquire and manage the imaged data captured by the camera.

In some particular embodiments, the image data is acquired by an infrared camera.

Data obtained by infrared camera is sometimes useful in the event of low visibility conditions.

In a further inventive aspect, the invention provides a data processing element comprising means for carrying out the steps of a method according to the first inventive aspect and a computer program comprising instructions which, when the program is executed by a control unit, cause the control unit to carry out the steps of a method according to the first inventive aspect.

In a further inventive aspect, the invention provides an automotive lighting device comprising:
a matrix arrangement of solid-state light sources;
a camera configured to acquire image data; and
a control unit for performing the steps of the method according to the first inventive aspect.

This lighting device provides the advantageous functionality of adapting the light pattern to the conditions transmitted by the data acquired by the camera, in such a way that the new light pattern provided by the control unit improves visual comfort and safety.

In some particular embodiments, the matrix arrangement comprises at least 2000 solid-state light sources.

A matrix arrangement is a typical example for this method. The rows may be grouped in projecting distance ranges and each column of each group represent an angle interval. This angle value depends on the resolution of the matrix arrangement, which is typically comprised between 0.01º per column and 0.5º per column. As a consequence, many light sources may be managed at the same time.

To complete the description and in order to provide for a better understanding of the invention, a set of drawings is provided. Said drawings form an integral part of the description and illustrate an embodiment of the invention, which should not be interpreted as restricting the scope of the invention, but just as an example of how the invention can be carried out. The drawings comprise the following figures:
[fig 1] shows a general perspective view of an automotive lighting device according to the invention.
[fig 2] shows an example of a blocks diagram of the operation of this lighting device.
[fig 3] shows an example of an image acquired by the camera in a method according to the invention.
[fig 4] shows a first image of an example of a method according to the invention.
[fig 5] shows a vehicle of the invention which has adapted the light pattern due to a method according to the invention.

In these figures, the following reference numbers have been used:
1 Headlamp
2 LED
3 Control unit
4 Camera
5 Adapted light pattern
100 Automotive vehicle

The example embodiments are described in sufficient detail to enable those of ordinary skill in the art to embody and implement the systems and processes herein described. It is important to understand that embodiments can be provided in many alternate forms and should not be construed as limited to the examples set forth herein.

Accordingly, while embodiment can be modified in various ways and take on various alternative forms, specific embodiments thereof are shown in the drawings and described in detail below as examples. There is no intent to limit to the particular forms disclosed. On the contrary, all modifications, equivalents, and alternatives falling within the scope of the appended claims should be included.

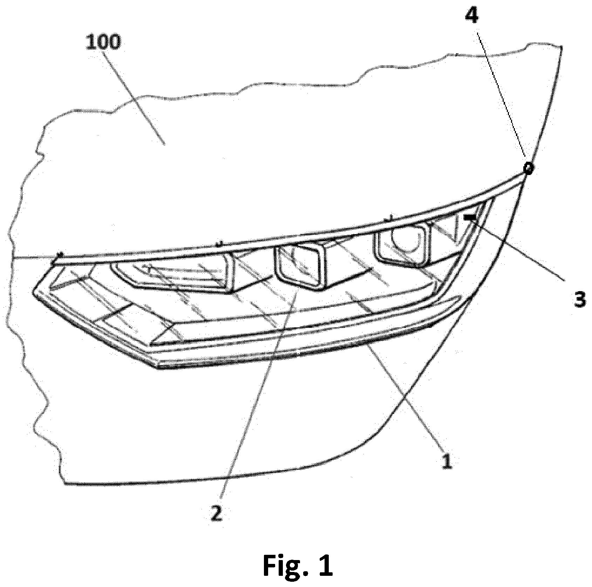

[fig 1] shows a general perspective view of an automotive lighting device according to the invention.

This headlamp 1 is installed in an automotive vehicle 100 and comprises
a matrix arrangement of LEDs 2, intended to provide a light pattern;
a control unit 3 to perform a control of the operation of the LEDs 2; and
a camera 4 intended to provide some external data.

This matrix configuration is a high-resolution module, having a resolution greater than 2000 pixels. However, no restriction is attached to the technology used for producing the projection modules.

The control unit, previously to its installation in the automotive headlamp, has undergone two training processes.

Both training processes comprise some machine learning steps, where the control unit is trained with training data provided by the plurality of sensors.

The first training process is concerning the transformation of the image data into a luminance map. This first training process comprises
training the control unit to provide a luminance map with a training dataset of image data; and
testing the control unit comparing the luminance map provided by the control unit with measured luminance map.

Different image data are provided, and the correspondent luminance map is created, due to the aforementioned algorithm.

The second training process is concerning the calculation of the adapted light pattern. This second training process comprises
training the control unit to calculate an adapted light pattern in response to a training dataset of luminance map and desired light pattern; and
testing the control unit comparing the calculated adapted light pattern with measured light pattern.

In this case, different luminance maps are provided, together with different desired light patterns. The control unit is trained to create the optimal light pattern which, in the particular light circumstances, achieves a final desired light pattern.

Once both training processes are finished, the control unit is installed in an automotive vehicle 100 of [fig 1], to perform the luminous control of the headlamp 1.

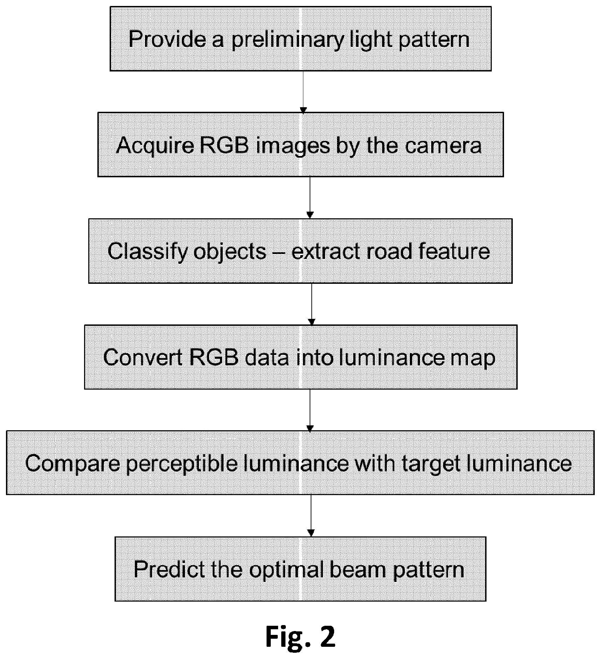

[fig 2] shows an example of a blocks diagram of the operation of this lighting device: a preliminary light pattern is provided by the lighting device, according to the lighting functionality selected by the vehicle user. If no more light was present in the vehicle (in the event of a perfectly dark scenario), the adapted light pattern would coincide with this preliminary pattern. The invention aims to find which adapted light pattern, in combination with the existing luminous map, provides a desired light pattern, which corresponds to the map that would be created by the preliminary light pattern in the event of a perfectly dark scenario.

Each 0.2 seconds, the control unit of the lighting device receives an RGB image data which has been acquired by the camera. From this image, objects are classified, extracting the road feature and the rest of the objects present in the image. Then, these data is converted into a luminance map by the control unit. The control unit compares the luminance map with the desired light pattern and then creates an adapted light pattern which, in combination with the luminance map estimated in the previous steps, provides the user with the desired light pattern.

The headlamp will project the adapted light pattern, which provides an adequate lighting at the minimum power consumption.

This process is repeated each 0.2 seconds.

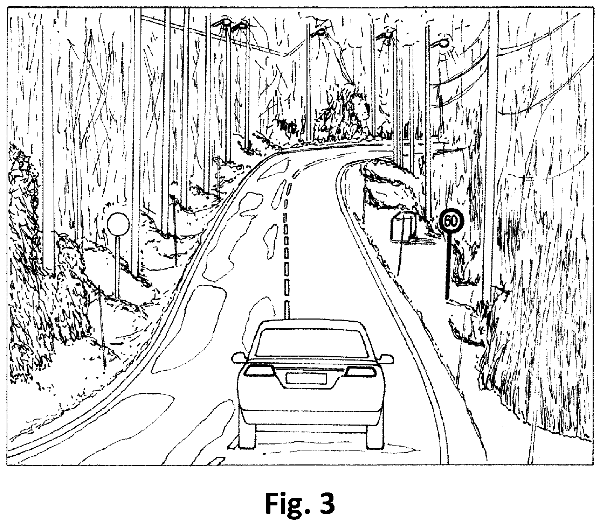

[fig 3] shows an example of an image acquired by the camera. This image is used to create a luminance map where some details are particularly relevant. First detail is the luminous intensity of the lights of the preceding vehicle, which affect to the visual comfort of the driver. Second detail is the flash on the road, due to the reflection of the light emitted by the lampposts on the wet pavement. These details are considered by the control unit when creating the adapted light pattern that will be projected by the lighting device.

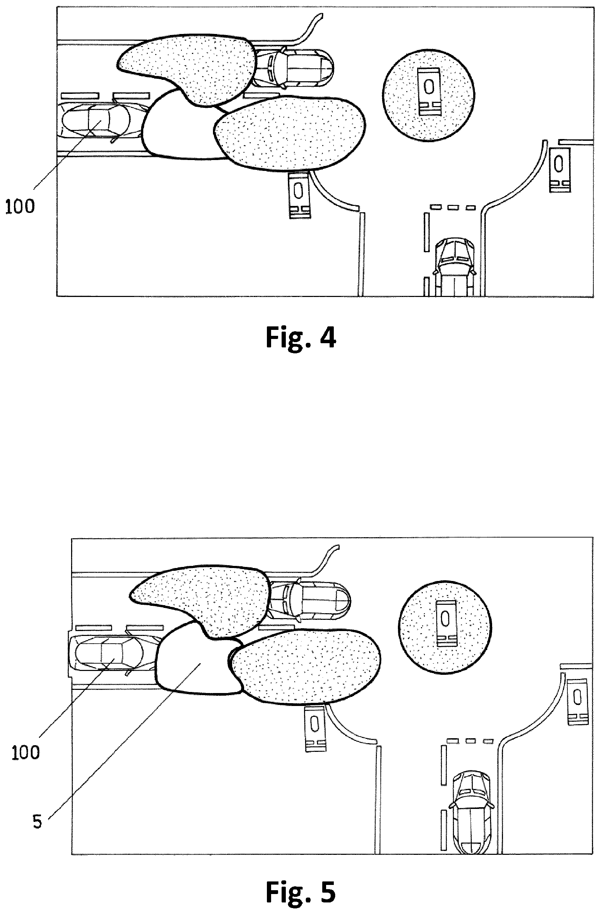

[fig 4] shows a first image of an example of a method according to the invention. This is a first descriptive image of the luminance map obtained by the control unit. In this luminance map, the light projected by a vehicle and by a lamppost are shown in this figure. The automotive vehicle 100 of the invention projects a preliminary light pattern, but this preliminary light pattern collides with the light patterns provided by the other objects.

[fig 5] shows the vehicle 100 of the invention which has adapted the light pattern 5 due to a method according to the invention, to achieve the desired light pattern in view of the luminance map calculated in [fig 4].

## Claims

1. Method for operating an automotive lighting device (1) comprising a matrix arrangement of light pixels (2), the method comprising the steps of:
o acquiring image data of a working zone in front of the automotive lighting device;
o transforming the image data into a luminance map;
o providing a desired light pattern;
o calculating an adapted light pattern which provides the desired light pattern when projected over the luminance map;
o projecting the adapted light pattern (5); and
o wherein the step of transforming the image data into the luminance map is carried out by a control unit which is previously configured to transform the image data into the luminance map by means of:
▪ training the control unit (3) to provide a luminance map with a training dataset of image data, and
▪ testing the control unit (3) comparing the luminance map provided by the control unit with measured luminance map.

2. Method according to claim 1, wherein the steps of the method are performed periodically with a period lower than 2 seconds, and particularly lower than 0.5 seconds.

3. Method according to claim 2, wherein the step of training the control unit comprises the use of a machine learning algorithm.

4. Method according to any of the preceding claims, wherein the step of calculating the adapted light pattern is carried out by a control unit which is previously configured to calculate the adapted light pattern by means of:
o training the control unit (3) to calculate an adapted light pattern in response to a training dataset of luminance map and desired light pattern; and
o testing the control unit (3) comparing the calculated adapted light pattern with measured light pattern.

5. Method according to claim 4, wherein the step of training the control unit comprises the use of a machine learning algorithm.

6. Method according to any of the preceding claims, wherein the luminance map isolates the position of the road from the position of other objects in the working zone.

7. Method according to any of the preceding claims, wherein the image data comprises RGB pixels.

8. Method according to any of the preceding claims, wherein the image data is acquired by an infrared camera.

9. Data processing element comprising means adapted for carrying out the steps of a method according to any of the preceding claims.

10. Computer program comprising instructions which, when the program is executed by a control unit, cause the control unit to carry out the steps of a method according to any of claims 1 to 8.

11. Automotive lighting device comprising:
o a matrix arrangement of solid-state light sources (2);
o a camera (4) configured to acquire image data; and
o a control unit (3) for performing the steps of the method according to any claims 1 to 8.

12. Automotive lighting device (1) according to claim 11, wherein the matrix arrangement comprises at least 2000 solid-state light sources (2).

## Patentansprüche

1. Verfahren zum Betreiben einer Kraftfahrzeugbeleuchtungseinrichtung (1) mit einer Matrixanordnung von Leuchtpixeln (2), wobei das Verfahren die folgenden Schritte umfasst:
- Erfassen von Bilddaten eines Verarbeitungsbereichs vor der Kraftfahrzeugbeleuchtungseinrichtung;
- Umwandeln der Bilddaten in eine Leuchtdichtekarte;
- Bereitstellen eines gewünschten Lichtmusters;
- Berechnen eines angepassten Lichtmusters, das das gewünschte Lichtmuster liefert, wenn es auf die Luminanzkarte projiziert wird
- Projizieren des angepassten Lichtmusters (5)
- wobei der Schritt der Umwandlung der Bilddaten in eine Luminanzkarte durch eine Steuereinheit durchgeführt wird, die zuvor so konfiguriert wurde, dass sie die Bilddaten in eine Luminanzkarte umwandelt, indem
o eines Trainings der Steuereinheit (3) zur Bereitstellung einer Luminanzkarte mit einem Satz von Trainingsbilddaten
o eines Testens der Steuereinheit (3) durch Vergleichen der von der Steuereinheit bereitgestellten Luminanzkarte mit der tatsächlich gemessenen Luminanzkarte.

2. Verfahren nach Anspruch 1, wobei die Schritte des Verfahrens periodisch mit einer Periode von weniger als 2 Sekunden und insbesondere weniger als 0,5 Sekunden durchgeführt werden.

3. Verfahren nach einem der vorstehenden Ansprüche, wobei der Schritt des Trainings der Steuereinheit die Verwendung eines Algorithmus für maschinelles Lernen umfasst.

4. Verfahren nach einem der vorstehenden Ansprüche, wobei der Schritt des Berechnens des angepassten Lichtmusters von einer Steuereinheit durchgeführt wird, die zuvor so konfiguriert wurde, dass sie das angepasste Lichtmuster berechnet, indem
- die Steuereinheit (3) darauf trainiert wird, ein angepasstes Lichtmuster als Reaktion auf einen Satz von Trainingsdaten der Luminanzkarte und des gewünschten Lichtmusters zu berechnen
- Testen der Steuereinheit (3) durch Vergleichen des berechneten angepassten Lichtmusters mit dem gemessenen Lichtmuster.

5. Verfahren nach Anspruch 4, wobei der Schritt des Trainings der Steuereinheit die Verwendung eines Algorithmus für maschinelles Lernen umfasst.

6. Verfahren nach einem der vorstehenden Ansprüche, wobei die Luminanzkarte die Position der Straße von der Position anderer Objekte im Verarbeitungsbereich isoliert.

7. Verfahren nach einem der vorstehenden Ansprüche, wobei die Bilddaten RGB-Pixel umfassen.

8. Verfahren nach einem der vorstehenden Ansprüche, wobei die Bilddaten von einer Infrarotkamera erfasst werden.

9. Datenverarbeitungselement mit Mitteln, die dazu ausgelegt sind, die Schritte eines Verfahrens gemäß einem der vorstehenden Ansprüche auszuführen.

10. Computerprogramm mit Befehlen, die, wenn das Programm von einer Steuereinheit ausgeführt wird, bewirken, dass die Steuereinheit die Schritte eines Verfahrens gemäß einem der Ansprüche 1 bis 8 ausführt.

11. Kfz-Beleuchtungsvorrichtung, umfassend:
- eine Matrixanordnung von Festkörperlichtquellen (2);
- eine Kamera (4), die zum Erfassen von Bilddaten konfiguriert ist
- eine Steuereinheit (3) zum Ausführen der Verfahrensschritte gemäß den Ansprüchen 1 bis 8.

12. Kfz-Beleuchtungsvorrichtung (1) nach Anspruch **11,** wobei die Matrixanordnung mindestens 2000 Halbleiterlichtquellen (2) umfasst.

## Revendications

1. Procédé pour faire fonctionner un dispositif d'éclairage automobile (1) comprenant un arrangement matriciel de pixels lumineux (2), le procédé comprenant les étapes suivantes:
- acquisition de données d'image d'une zone de traitement devant le dispositif d'éclairage automobile ;
- transformation des données d'image en une carte de luminance ;
- fourniture d'un motif lumineux souhaité ;
- calcul d'un motif lumineux adapté qui fournit le motif lumineux souhaité lorsqu'il est projeté sur la carte de luminance
- projection du motif lumineux adapté (5)
- dans lequel l'étape de transformation des données d'image en une carte de luminance est effectuée par une unité de contrôle qui est préalablement configurée pour transformer les données d'image en une carte de luminance au moyen:
o d'un entraînement de l'unité de contrôle (3) à fournir une carte de luminance avec un ensemble de données d'image d'entraînement
o d'un test de l'unité de contrôle (3) en comparant la carte de luminance fournie par l'unité de contrôle avec la carte de luminance réellement mesurée.

2. Procédé selon la revendication 1, dans laquelle les étapes dudit procédé sont effectuées périodiquement avec une période inférieure à 2 secondes, et particulièrement inférieure à 0,5 seconde.

3. Procédé selon l'une quelconque des revendications précédentes, dans lequel l'étape d'entraînement de l'unité de contrôle comprend l'utilisation d'un algorithme d'apprentissage automatique.

4. Procédé selon l'une quelconque des revendications précédentes, dans lequel l'étape de calcul du motif lumineux adapté est effectuée par une unité de contrôle qui est préalablement configurée pour calculer le motif lumineux adapté au moyen de
- former l'unité de contrôle (3) à calculer un schéma lumineux adapté en réponse à un ensemble de données de formation de la carte de luminance et du schéma lumineux souhaité
- tester l'unité de contrôle (3) en comparant le motif lumineux adapté calculé avec le motif lumineux mesuré.

5. Procédé selon la revendication 4, dans lequel l'étape d'entraînement de l'unité de contrôle comprend l'utilisation d'un algorithme d'apprentissage automatique.

6. Procédé selon l'une quelconque des revendications précédentes, dans lequel la carte de luminance isole la position de la route de la position des autres objets dans la zone de traitement.

7. Procédé selon l'une des revendications précédentes, dans lequel les données d'image comprennent des pixels RGB.

8. Procédé selon l'une des revendications précédentes, dans lequel les données d'image sont acquises par une caméra infrarouge.

9. Élément de traitement de données comprenant des moyens adaptés pour exécuter les étapes d'un procédé selon l'une des revendications précédentes.

10. Programme informatique comprenant des instructions qui, lorsque le programme est exécuté par une unité de contrôle, font en sorte que l'unité de contrôle exécute les étapes d'un procédé selon l'une des revendications 1 à 8.

11. Dispositif d'éclairage automobile comprenant :
- un arrangement matriciel de sources lumineuses à l'état solide (2) ;
- une caméra (4) configurée pour acquérir des données d'image
- une unité de contrôle (3) pour l'exécution des étapes du procédé selon les revendications 1 à 8.

12. Dispositif d'éclairage automobile (1) selon la revendication 11, dans lequel l'agencement matriciel comprend au moins 2000 sources lumineuses à semi-conducteurs (2).
